# EUROPÄISCHE PATENTSCHRIFT

(11) **EP 2 948 701 B1**
(45) Veröffentlichungstag und Bekanntmachung des Hinweises auf die Patenterteilung: **28.11.2018**
(21) Anmeldenummer: 14701375.9
(22) Anmeldetag: 24.01.2014
(51) Int. Cl.: F16K 7/12, B60T 13/66, B60T 13/68, B60T 17/04

(54) **RÜCKSCHLAGVENTIL FÜR ENTLÜFTUNGS- ODER AUSLASSÖFFNUNGEN VON DRUCKLUFTEINRICHTUNGEN VON FAHRZEUGEN**
CHECK VALVE FOR VENTILATION OR OUTLET OPENINGS OF COMPRESSED AIR APPARATUSES IN VEHICLES
SOUPAPE ANTIRETOUR POUR LES OUVERTURES DE MISE À L'AIR LIBRE OU D'ÉVACUATION DE DISPOSITIFS À AIR COMPRIMÉ DE VÉHICULES

(30) Priorität: 25.01.2013 DE 102013100778
(43) Veröffentlichungstag der Anmeldung: 02.12.2015
(73) Patentinhaber: KNORR-BREMSE Systeme für Nutzfahrzeuge GmbH, 80809 München (DE)
(72) Erfinder: MENYHART, Laszlo, H-2360 Gyal (HU); GREBE, Jan, 80939 München (DE); FOJTYIK, Gabor, H-2310 Szigetszentmiklos (HU); BEMETZ, Thomas, 80797 München (DE)
(86) Internationale Anmeldenummer: PCT/EP2014/051405
(87) Internationale Veröffentlichungsnummer: WO 2014/114750

(56) Entgegenhaltungen:
- EP-A2- 0 474 437
- WO-A1-2007/102935
- DE-A1- 1 938 206
- DE-A1- 3 444 865
- DE-A1- 19 630 261
- DE-A1- 19 918 070
- DE-A1-102009 030 898
- DE-B3-102008 028 439
- GB-A- 2 075 640
- GB-A- 2 429 261
- US-A- 4 146 275
- US-A- 4 733 919

## Beschreibung

Die Erfindung betrifft ein Entlüftungs- oder Rückschlagventil für Entlüftungs- oder Auslassöffnungen von Drucklufteinrichtungen von Fahrzeugen, gemäß dem Oberbegriff von Anspruch 1.

Eine solches Entlüftungs- oder Rückschlagventil ist aus der gattungsbildenden DE 19 38 206 A bekannt und beispielsweise Bestandteil eines elektro-pneumatischen ABS-Drucksteuerventils gemäß DE 197 01 200 C2 der Anmelderin der vorliegenden Patentanmeldung. Das Entlüftungs- oder Rückschlagventil ist gemäß der dort in Fig.5 gezeigten Ausführungsform in einer unteren Entlüftungsöffnung des Gehäuses des ABS-Drucksteuerventils angeordnet, welches zum bremsschlupfabhängigen Druckhalten und Drucksenken des Bremsdrucks einer schlupfgeregelten pneumatischen Bremsanlage eines Fahrzeugs dient. Zum Drucksenken bei von einer ABS-Elektronik detektiertem übermäßigem Bremsschlupf wird ein Steuerventil des ABS-Drucksteuerventils erregt, wodurch Druckluft aus der Bremsleitung über das Innere des ABS-Drucksteuerventils in die Entlüftungsöffnung und in das Entlüftungs- oder Rückschlagventil gelangt, wobei durch das Druckgefälle die Membran vom Ventilsitz abhebt und die Druckluft in die Atmosphäre gelangen kann.

Weiterhin ist aus DE 10 2007 054 760 B3 ein solches Entlüftungs- oder Rückschlagventil bekannt, welches dort in einer Entlüftungsöffnung eines Druckbegrenzungsventils einer Druckluftbremsanlage eines Schienenfahrzeugs angeordnet ist, um bei einem Füllstoß übermäßigen Druck in einer Hauptluftleitung auf einen vorbestimmten Wert dadurch zu begrenzen, dass überschüssige Druckluft über die Entlüftungsöffnung und das darin angeordnete Entlüftungs- oder Rückschlagventil abströmt.

Aus WO 96/21589 A1 ist eine Anwendung bekannt, bei welcher in einer Wandung einer eine Speicherfeder aufnehmenden Federkammer eines Federspeicherbremszylinders ein Entlüftungs- oder Rückschlagventil angeordnet ist, um bei einer durch Lösen der Federspeicherbremse bedingten Volumenverkleinerung der Federkammer diese zu entlüften.

Allen diesen Anwendungen eines Entlüftungs- oder Rückschlagventils ist gemein, dass sie den Fluss eines Mediums, beispielsweise von Druckluft nur in einer Richtung zulassen und ihn in der Gegenrichtung unterbinden sollen. Für die oben genannten Anwendungen bedeutet dies beispielsweise, dass das Entlüftungs- oder Rückschlagventil den Fluss von Druckluft nur vom Inneren der betreffenden Drucklufteinrichtung in die Atmosphäre gestatten, aber eine Strömung in Gegenrichtung unterbinden soll.

Neben dieser Grundfunktion sollen im Bereich der Kraftfahrzeugtechnik verwendete und als gattungsgemäße Membranventile ausgeführte Entlüftungs- oder Rückschlagventile einen hohen Luftdurchsatz, geringe Drosseleffekte beim Ausströmen, ein zuverlässiges Sperren der unerwünschten Strömungsrichtung, ein zuverlässiges Verhindern von Eindringen von Schmutz, ein geringer Öffnungs- oder Ansprechdruck sowie vor allem eine geringe Geräuschentwicklung gewährleisten.

Letzteres hat sich jedoch als schwierig herausgestellt, als vor allem bei relativ nachgiebigem Material der Membrane eine hohe Geräuschentwicklung zu beobachten ist, weil dann die nachgiebige Membrane durch die Luftströmung leichter zu Schwingungen (Körperschall) angeregt werden kann, die einen entsprechenden Luftschall bedingen. Wenn demgegenüber die Steifigkeit des Materials der Membrane relativ hoch ist, so sind die Dichtigkeitseigenschaften gegenüber dem Ventilsitz eher mäßig.

Gemäß GB 2 429 261 A kann sich die Membrane eines Ventils axial frei zwischen einer oberen Position, in welche sie einen Entlüftungsanschluss verschließt, aber eine Strömung zwischen einem Einlass und einem Auslass zulässt, und einer unteren Position bewegen, in welcher sie den Einlass verschließt, aber eine Strömung vom Auslass in den Entlüftungsanschluss ermöglicht. In der oberen Position der Membrane kann sich diese an Vorsprüngen abstützen.

Gemäß DE 34 44 865 A1 ist die Membrane eines Ventils entlang ihres gesamten Umfangs an einer Einspannfläche zwischen einem Unterteil und einem Deckel eingespannt. Bei Überdruck in einem Einlass hebt der zentrale Teil der Membrane über seinen gesamten Umfang von einer Dichtkante eines Stützkörpers ab.

Davon ausgehend besteht die Aufgabe der Erfindung darin, ein Entlüftungs- oder Rückschlagventil der eingangs erwähnten Art derart weiter zu entwickeln, dass es bei guten Dichtigkeitseigenschaften zugleich eine geringe Geräuschentwicklung gewährleistet.

Diese Aufgabe wird durch die Merkmale gemäß Anspruch 1 gelöst.

Gemäß der Erfindung sind in Umfangsrichtung der Membranscheibe gesehen am Ventilgehäuse mehrere mit Umfangsabstand zueinander angeordnete Niederhalter vorgesehen, welche den radial äußeren Bereich der Membranscheibe gegen den Ventilsitz lokal niederhalten.

Dann kann der radial äußere Bereich der Membranscheibe bzw. dessen radial äußerer Rand nicht mehr vollständig vom Ventilsitz abheben, sondern in Umfangsrichtung gesehen nur die zwischen den Niederhaltern angeordneten Umfangsabschnitte des radial äußeren Bereichs der Membranscheibe. Die Niederhalter, welche ein Abheben der Membranscheibe vom Ventilsitz lokal verhindern bzw. einschränken sorgen für eine Erhöhung der Einspannsteifigkeit der Membran am Ventilgehäuse und verhindern, dass die Membrane strömungsbedingt großflächig schwingen kann. Da somit nur noch kleinere Membranflächen frei und dann nur mit reduzierter Schwingungsamplitude schwingen können, sinkt die potentiell Luftschall abstrahlende Fläche der Membranscheibe, was insgesamt eine geringere Tendenz zur Ausbildung von Luftschall zur Folge hat. Darüber hinaus konnte die Anmelderin anhand von Versuchen feststellen, dass erfindungsgemäß ausgeführte Entlüftungs- oder Rückschlagventile neben einer geringen Geräuschentwicklung auch einen hohen Luftdurchsatz, geringe Drosseleffekte beim Ausströmen, ein zuverlässiges Sperren der unerwünschten Strömungsrichtung, ein zuverlässiges Verhindern von Eindringen von Schmutz sowie einen geringen Öffnungsdruck aufweisen.

Vorzugsweise sind mehrere solcher Niederhalter in Umfangsrichtung gesehen mit etwa gleichem Umfangsabstand am Ventilgehäuse vorgesehen. Insbesondere pressen die Niederhalter den radial äußeren Bereich der Membranscheibe lokal gegen den Ventilsitz. Alternativ können die Niederhalter derartige Niederhaltekräfte auf den radial äußeren Bereich der Membranscheibe ausüben, dass dieser bei Vorhandensein eines entsprechend großen Druckgefälles im Öffnungssinn gerade noch den Ventilsitz kontaktiert oder von diesem sogar geringfügig abhebt.

Im eingebauten Zustand des erfindungsgemäßen Entlüftungs- oder Rückschlagventils in eine Entlüftungs- oder Auslassöffnung einer Drucklufteinrichtung eines Fahrzeugs kann das Ventilgehäuse des Entlüftungs- oder Rückschlagventils zumindest teilweise in ein Gehäuse der Drucklufteinrichtung eines Fahrzeugs integriert und insbesondere mit diesem einstückig ausgeführt sein. Die Bohrung des Ventilgehäuses, welche durch die mit dem Ventilsitz zusammen wirkende Membrane verschlossen wird, bildet dann einen Abschnitt der Entlüftungs- oder Auslassöffnung der Drucklufteinrichtung, wobei der Eingangsraum dann durch die Entlüftungs- oder Auslassöffnung der Drucklufteinrichtung und der Ausgangsraum durch die Atmosphäre gebildet wird. In diesem Fall erlaubt das erfindungsgemäße Entlüftungs- oder Rückschlagventil eine Strömung von der Entlüftungs- oder Auslassöffnung der Drucklufteinrichtung in die Atmosphäre, verhindert aber eine Rückströmung.

Alternativ kann das erfindungsgemäße Entlüftungs- oder Rückschlagventil auch als separate Baugruppe ausgeführt sein, welche dann in der Drucklufteinrichtung in einer entsprechenden Aufnahme wie einer Entlüftungs- oder Auslassöffnung verbaut wird. Nicht zuletzt kann das erfindungsgemäße Entlüftungs- oder Rückschlagventil aber auch in einer Druckleitung der Drucklufteinrichtung verbaut werden.

Durch die in den Unteransprüchen aufgeführten Maßnahmen sind vorteilhafte Weiterbildungen und Verbesserungen der in Anspruch 1 angegebenen Erfindung möglich.

Besonders bevorzugt sind die Niederhalter an einem Deckel des Ventilgehäuses angeordnet, welcher die Bohrung des Ventilgehäuses mit der wenigstens einen Membranscheibe abdeckt. Durch eine geeignete Ausbildung des Deckels kann dieser helfen, die Membrane vor Beschädigung von außen zu schützen sowie ein Eindringen von Schmutz zu verhindern. Weiterhin können die Niederhalter mit dem Deckel insbesondere einstückig ausgeführt werden, was eine einfache Fertigung und Montage des erfindungsgemäßen Entlüftungs- oder Rückschlagventils bedingt.

Gemäß einer Weiterbildung sind in Umfangsrichtung des Deckels gesehen, welcher beispielsweise einen kreisförmigen Verbindungsteil zum Ventilgehäuse aufweist, an den Umfangspositionen der Niederhalter Entlüftungsöffnungen im Deckel vorgesehen.

Um die Membranscheibe und den Ventilsitz im Bereich dieser Entlüftungsöffnungen im Deckel gegenüber Umwelt- und Strömungseinflüssen abzuschirmen, sind in Radialrichtung des Deckels gesehen den Entlüftungsöffnungen und den Niederhaltern im Querschnitt kreisbogenförmige Wandabschnitte des Deckels zwischen geordnet, welche in Umfangsrichtung des Deckels gesehen an den Positionen der Niederhalter angeordnet sind und sich in Bezug zu einer Mittelachse des Deckels axial vom Deckel weg erstrecken. Auch diese Wandabschnitte sind bevorzugt einstückig mit dem Deckel ausgebildet.

Um einen besonders umfänglichen Schutz der Membranscheibe und des Ventilsitzes zu gewährleisten, überragen die Wandabschnitte des Deckels besonders bevorzugt den Ventilsitz in einer Richtung parallel zur Mittelachse des Deckels gesehen. Zu demselben Zweck ist die Bogenlänge der kreisbogenförmigen Wandabschnitte größer als die Umfangserstreckung der Entlüftungsöffnungen.

Um bei einer den Öffnungsdruck überschreitenden Druckdifferenz eine Strömung vom Eingangsraum durch die Strömungsquerschnitte, welche von den vom Ventilsitz druckbedingt abgehobenen und nicht durch die Niederhalter am Ventilsitz niedergehaltenen Umfangsabschnitte der Membranscheibe frei gegeben sind in die Entlüftungsöffnungen im Deckel zu gestatten, sind in Umfangsrichtung des Deckels gesehen den kreisbogenförmigen Wandabschnitten Strömungsöffnungen zwischen geordnet, welche in einen radial äußeren Ringkanal des Deckels münden, welcher mit den Entlüftungsöffnungen kommuniziert. Folglich wird die durch die freien Strömungsquerschnitte zwischen Ventilsitz und Membranscheibe fließende Druckluftströmung in radialer Richtung gesehen um die Niederhalter und die Wandabschnitte herum geleitet, um in den ringförmigen Strömungskanal im Deckels zu münden, durch welchen sie dann in die Entlüftungsöffnungen im Deckel gelangen kann.

Die Membranscheibe ist bevorzugt an einem in der Bohrung des Ventilgehäuses zentral angeordneten Zapfen gehalten. Zur Zentrierung des Deckels am Ventilgehäuse ragt dieser Zapfen beispielsweise in eine Bohrung des Deckels hinein.

Bevorzugt sind an der Membranscheibe zugewandten Stirnflächen der Niederhalter dornförmige Anschläge für die Membranscheibe ausgebildet. Mit diesen dornförmigen Anschlägen kann die aus flexiblem und nachgiebigen Material gefertigte Membranscheibe besonders gut gegen den Ventilsitz fixiert werden. Diese dornförmigen Anschläge weisen beispielsweise einen Durchmesser von 1mm auf.

Besonders bevorzugt ist der Ventilsitz als schmale umlaufende Dichtschneide an einem Bohrungsrand der Bohrung ausgebildet, wobei die Dichtschneide mit den dornförmigen Anschlägen radial fluchtet.

Wie oben bereits ausgeführt, ist gemäß einer bevorzugten Anwendung das erfindungsgemäße Entlüftungs- oder Rückschlagventil in einer Entlüftungs- oder Auslassöffnung einer Drucklufteinrichtung eines Fahrzeugs angeordnet. Insbesondere kann die Drucklufteinrichtung wenigstens ein elektro-pneumatisches oder pneumatisches Ventil mit wenigstens einer Entlüftungsöffnung beinhalten, in der dann ein erfindungsgemäßes Entlüftungs- oder Rückschlagventil angeordnet ist. Das elektro-pneumatische Ventil ist beispielsweise ein ABS-Ventil oder ein ASR-Ventil einer brems- und/oder antriebsschlupfgeregelten pneumatischen oder elektro-pneumatischen Bremsanlage des Fahrzeugs, wie es beispielsweise in der oben erwähnten DE 197 01 200 C2 beschrieben wird.

Ebenso könnte die Drucklufteinrichtung des Fahrzeugs wenigstens einen Federspeicherbremszylinder einer pneumatischen oder elektro-pneumatischen Bremsanlage des Fahrzeugs umfassen, beispielsweise gemäß der oben erwähnten WO 96/21589 A1, wobei in wenigstens einer Entlüftungsöffnung einer Wandung einer eine Speicherfeder aufnehmenden Federkammer des Federspeicherbremszylinders ein erfindungsgemäßes Entlüftungs- oder Rückschlagventil angeordnet sein kann.

Weitere die Erfindung verbessernde Maßnahmen werden nachstehend in der Beschreibung von Ausführungsbeispielen der Erfindung und in der Zeichnung näher dargestellt.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines erfindungsgemäßen Entlüftungs- oder Rückschlagventils gemäß einer bevorzugten Ausführungsform der Erfindung;
- Fig.2: eine Ansicht von unten auf einen Deckel des Entlüftungs- oder Rückschlagventils von Fig.1.

### Beschreibung des Ausführungsbeispiels

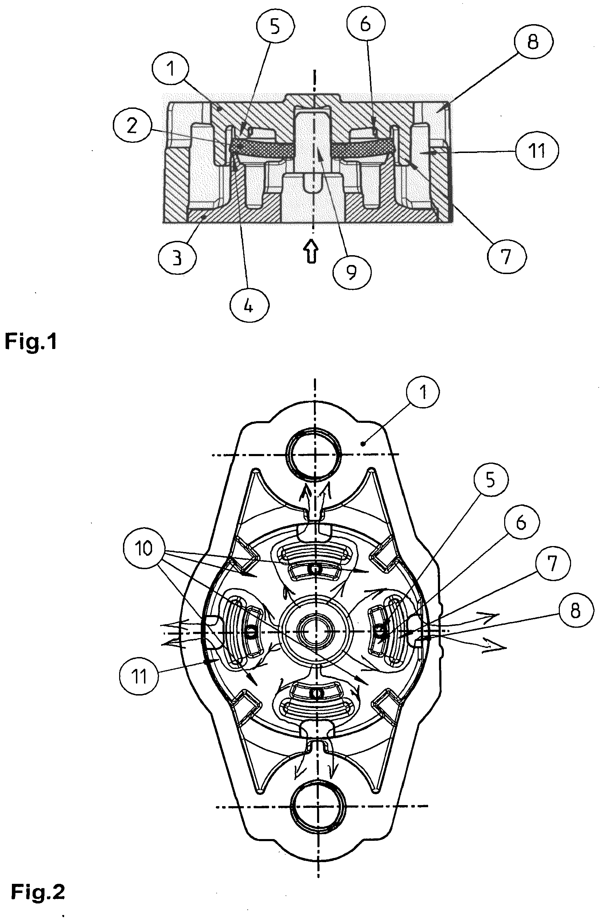

Das in Fig.1 im Querschnitt gezeigte Entlüftungs- oder Rückschlagventil ist beispielsweise in eine Auslass- oder Entlüftungsöffnung eines Druckluftkanals eines hier aus Maßstabsgründen nicht gezeigten ABS-Drucksteuerventils (ABS-Ventil) oder eines Antriebsschlupfregelungsventils (ASR-Ventil) einer pneumatischen oder elektro-pneumatischen Bremsanlage eines Nutzfahrzeugs integriert. Das Entlüftungs- oder Rückschlagventil dient dann dazu, eine Strömung (in Fig.1 durch den Pfeil symbolisiert) von dem Druckluftkanal, der über die Auslass- oder Entlüftungsöffnung in die Atmosphäre mündet, in die Atmosphäre zu ermöglichen, aber eine Strömung in Gegenrichtung zu verhindern.

Das Entlüftungs- oder Rückschlagventil ist ein Membranventil und öffnet, sobald eine Druckdifferenz zwischen dem Druckluftkanal und der Atmosphäre einen Öffnungsdruck des Entlüftungs- oder Rückschlagventils erreicht oder überschritten hat. Dies ist bei der hier beschriebenen Anwendung beispielsweise der Fall, wenn das elektro-magnetische Auslassventil des ABS-Ventils oder des ASR-Ventils zum Senken des Bremsdrucks geöffnet wird und dann Druckluft aus der Bremsleitung über das geöffnete Auslassventil des ABS-Ventils in den Druckluftkanal und in dessen Auslass- oder Entlüftungsöffnung und von dort über das erfindungsgemäße Entlüftungs- oder Rückschlagventil in die Atmosphäre abströmt.

Das Entlüftungs- oder Rückschlagventil umfasst eine Membranscheibe 2 aus flexiblem Material, beispielsweise aus einem Elastomer, welche mit einem zentralen Bereich in der Auslass- oder Entlüftungsöffnung gehalten und mit einem radial äußeren Bereich gegen einen Ventilsitz 4 am Ventilgehäuse 3 vorgespannt ist. Besonders bevorzugt ist der Ventilsitz 4 als umlaufende Dichtschneide am Rand der Auslass- oder Entlüftungsöffnung des Drucksteuerventils ausgebildet. Das Ventilgehäuse 3 besteht hier dann beispielsweise in der Wandung des Druckluftkanals im Bereich der Auslass- oder Entlüftungsöffnung des Drucksteuerventils, mit welcher es bevorzugt einstückig ausgebildet ist

Bei einem den Öffnungsdruck des Entlüftungs- oder Rückschlagventils erreichenden oder überschreitenden Druckgefälle zwischen dem Druck im Druckluftkanal des Drucksteuerventils und dem Atmosphärendruck hebt der radial äußere Bereich der Membranscheibe 2 vom Ventilsitz 4 ab und gibt dann einen Strömungsquerschnitt zwischen dem Druckluftkanal und der Atmosphäre frei.

Die Membranscheibe ist mit ihrem zentralen Bereich bevorzugt an einem in der Auslass- oder Entlüftungsöffnung des Drucksteuerventils zentral angeordneten Zapfen 9 gehalten. Bevorzugt ist der Ventilsitz 4 als umlaufende Dichtschneide an einem Rand der Auslass- oder Entlüftungsöffnung des Drucksteuerventils ausgebildet.

In Umfangsrichtung der Membranscheibe 2 gesehen sind mehrere mit Umfangsabstand zueinander angeordnete Niederhalter 6 vorgesehen, beispielsweise vier Niederhalter 6 an den zwei orthogonalen Achsen eines Deckels 1, welche den radial äußeren Bereich der Membranscheibe 2 gegen den Ventilsitz 4 lokal niederhalten, wie anhand von Fig.1 leicht vorstellbar ist.

Bevorzugt sind an einer der Membranscheibe 2 zugewandten Stirnfläche der Niederhalter 6 dornförmige Anschläge 5 für die Membranscheibe 2 ausgebildet. Mit diesen dornförmigen Anschlägen 5 kann die aus flexiblem und nachgiebigen Material gefertigte Membranscheibe 2 besonders gut gegen den Ventilsitz 4 fixiert werden. Die dornförmigen Anschläge 5 weisen beispielsweise einen Durchmesser von nur 1mm auf.

Besonders bevorzugt sind die Niederhalter 6 an dem Deckel 1 angeordnet, welcher die Auslass- oder Entlüftungsöffnung des Drucksteuerventils mit der Membranscheibe 2 abdeckt. Die Niederhalter 6 sind mit dem Deckel 1 insbesondere einstückig ausgeführt. Zur Zentrierung des Deckels 1 ragt der die Membranscheibe 2 halternde Zapfen 9 beispielsweise in eine zentrale Bohrung des Deckels 1 hinein. Der Deckel 1 kann dann beispielsweise mittels an Schraubaugen des Deckels 1 gekonterten Schrauben am Rand der Auslass- oder Entlüftungsöffnung des Drucksteuerventils befestigt werden, wie insbesondere aus Fig.2 hervorgeht.

In Umfangsrichtung des Deckels 1 gesehen, welcher beispielsweise einen kreisförmigen Verbindungsteil (Fig.2) mit dem Ventilgehäuse 3 bzw. hier mit dem Rand der Auslass- oder Entlüftungsöffnung des Drucksteuerventils aufweist, sind an den Umfangspositionen der Niederhalter 6 Entlüftungsöffnungen 8 im Deckel 1 vorgesehen. Mit anderen Worten sind die Niederhalter 6 und die Entlüftungsöffnungen 8 in radialer Flucht zueinander angeordnet.

Um die Membranscheibe 2 und den Ventilsitz 4 im Bereich der Entlüftungsöffnungen 8 im Deckel 1 gegenüber Umwelt- und Strömungseinflüssen abzuschirmen, sind in Radialrichtung des Deckels 1 gesehen den Entlüftungsöffnungen 8 und den Niederhaltern 6 im Querschnitt kreisbogenförmige Wandabschnitte 7 des Deckels 1 zwischen geordnet, welche in Umfangsrichtung des Deckels 1 gesehen an den Positionen der Niederhalter 7 angeordnet sind und sich in Bezug zu einer Mittelachse des Deckels 1 senkrecht zur Deckelebene axial vom Deckel 1 weg erstrecken. Mit anderen Worten sind dann die Niederhalter 6, die Wandabschnitte 7 und die Entlüftungsöffnungen 8 in radialer Flucht zueinander angeordnet. Auch die Wandabschnitte 7 sind bevorzugt einstückig mit dem Deckel 1 ausgebildet.

Die Wandabschnitte 7 des Deckels 1 überragen bevorzugt den Ventilsitz 4 in einer Richtung parallel zur Mittelachse des Deckels 1 gesehen. Weiterhin ist die Bogenlänge der kreisbogenförmigen Wandabschnitte 7 beispielsweise größer als die Umfangserstreckung der Entlüftungsöffnungen 8.

Um bei einer den Öffnungsdruck überschreitenden Druckdifferenz eine Strömung vom Druckluftkanal des ABS-Ventils oder des ASR-Ventils durch die Strömungsquerschnitte, welche von den vom Ventilsitz 4 druckbedingt abgehobenen und nicht durch die Niederhalter 6 am Ventilsitz 4 niedergehaltenen Umfangsabschnitte der Membranscheibe 2 frei gegeben sind, in die Entlüftungsöffnungen 8 im Deckel 1 zu gestatten, sind in Umfangsrichtung des Deckels 1 gesehen den kreisbogenförmigen Wandabschnitten 7 Strömungsöffnungen 10 zwischen geordnet, welche in einen radial äußeren Ringkanal 11 des Deckels 1 münden, welcher mit den Entlüftungsöffnungen 8 kommuniziert. Folglich wird die durch die freien Strömungsquerschnitte zwischen Ventilsitz 4 und Membranscheibe 2 fließende Druckluftströmung in radialer Richtung gesehen um die Niederhalter 6 und die Wandabschnitte 7 herum geleitet, um in den ringförmigen Strömungskanal 11 im Deckel 1 zu münden, durch welchen sie dann in die Entlüftungsöffnungen 8 im Deckel 1 gelangen kann, wie anhand von Fig.2 leicht vorstellbar ist.

### Bezugszahlenliste

- 1: Deckel
- 2: Membranscheibe
- 3: Ventilgehäuse
- 4: Ventilsitz
- 5: Anschläge
- 6: Niederhalter
- 7: Wandabschnitte
- 8: Entlüftungsöffnungen
- 9: Zapfen
- 10: Strömungsöffnung
- 11: ringförmiger Strömungskanal

## Patentansprüche

1. Entlüftungs- oder Rückschlagventil für Entlüftungs- oder Auslassöffnungen von Drucklufteinrichtungen von Fahrzeugen, beinhaltend wenigstens eine Membranscheibe (2) aus flexiblem Material, welche mit einem zentralen Bereich in einer Bohrung eines Ventilgehäuses gehalten und mit einem radial äußeren Bereich gegen einen Ventilsitz (4) am Ventilgehäuse (3) vorgespannt ist, um bei einem Druckgefälle zwischen einem Eingangsraum und einem Ausgangsraum oder der Atmosphäre von dem Ventilsitz (4) druckbedingt abzuheben und einen Strömungsquerschnitt zwischen dem Eingangsraum und dem Ausgangsraum oder der Atmosphäre freizugeben, **dadurch gekennzeichnet, dass** in Umfangsrichtung der Membranscheibe (2) gesehen am Ventilgehäuse (3) mehrere mit Umfangsabstand zueinander angeordnete Niederhalter (5, 6) vorgesehen sind, welche den radial äußeren Bereich der Membranscheibe (2) gegen den Ventilsitz (4) lokal niederhalten.

2. Entlüftungs- oder Rückschlagventil nach Anspruch 1, **dadurch gekennzeichnet, dass** die Niederhalter (5, 6) an einem Deckel (1) des Ventilgehäuses (3) angeordnet sind, welcher die Bohrung des Ventilgehäuses (3) mit der wenigstens einen Membranscheibe (2) abdeckt.

3. Entlüftungs- oder Rückschlagventil nach Anspruch 2, **dadurch gekennzeichnet, dass** in Umfangsrichtung des Deckels (1) gesehen an den Umfangspositionen der Niederhalter (5, 6) Entlüftungsöffnungen (8) im Deckel (1) vorgesehen sind.

4. Entlüftungs- oder Rückschlagventil nach Anspruch 3, **dadurch gekennzeichnet, dass** in Radialrichtung des Deckels (1) gesehen den EntlüftungsÖffnungen (8) und den Niederhaltern (5, 6) im Querschnitt kreisbogenförmige Wandabschnitte (7) des Deckels (1) zwischen geordnet sind, welche in Umfangsrichtung des Deckels (1) gesehen an den Positionen der Niederhalter (5, 6) angeordnet sind und sich in Bezug zu einer Mittelachse des Deckels (1) axial vom Deckel (1) weg erstrecken.

5. Entlüftungs- oder Rückschlagventil nach Anspruch 4, **dadurch gekennzeichnet, dass** die Wandabschnitte (7) des Deckels (1) den Ventilsitz (4) am Ventilgehäuse (3) in einer Richtung parallel zur Mittelachse des Deckels (1) gesehen überragen.

6. Entlüftungs- oder Rückschlagventil nach einem der Ansprüche 4 bis 5, **dadurch gekennzeichnet, dass** die Bogenlänge der kreisbogenförmigen Wandabschnitte (7) größer ist als die Umfangserstreckung der Entlüftungsöffnungen (8).

7. Entlüftungs- oder Rückschlagventil nach einem der Ansprüche 4 bis 6, **dadurch gekennzeichnet, dass** in Umfangsrichtung des Deckels (1) gesehen den kreisbogenförmigen Wandabschnitten (7) Strömungsöffnungen (10) zwischen geordnet sind, welche in einen radial äußeren Ringkanal (11) des Deckels (1) münden, welcher mit den Entlüftungsöffnungen (8) kommuniziert.

8. Entlüftungs- oder Rückschlagventil nach einem der Ansprüche 2 bis 7, **dadurch gekennzeichnet, dass** die Membranscheibe (2) an einem in der Bohrung des Ventilgehäuses (3) zentral angeordneten Zapfen (9) gehalten ist, welcher in eine Bohrung des Deckels (1) ragt.

9. Entlüftungs- oder Rückschlagventil nach einem der vorhergehenden Ansprüche, **dadurch gekennzeichnet, dass** an der Membranscheibe (2) zugewandten Stirnflächen der Niederhalter (5, 6) dornförmige Anschläge (5) für die Membranscheibe (2) ausgebildet sind.

10. Entlüftungs- oder Rückschlagventil nach einem der vorhergehenden Ansprüche, **dadurch gekennzeichnet, dass** der Ventilsitz (4) als umlaufende Dichtschneide an einem Bohrungsrand der Bohrung ausgebildet ist.

11. Entlüftungs- oder Rückschlagventil nach einem der vorhergehenden Ansprüche, **dadurch gekennzeichnet, dass** die Niederhalter (5, 6) den radial äußeren Bereich der Membranscheibe (2) lokal gegen den Ventilsitz (4) pressen.

12. Drucklufteinrichtung eines Fahrzeugs, beinhaltend in einer Entlüftungs- oder Auslassöffnung wenigstens ein Entlüftungs- oder Rückschlagventil nach einem der Ansprüche 1 bis 11.

13. Drucklufteinrichtung nach Anspruch 12 44 , **dadurch gekennzeichnet, dass** sie wenigstens ein elektro-pneumatisches oder pneumatisches Ventil mit wenigstens einer Entlüftungsöffnung beinhaltet, in der ein Entlüftungs- oder Rückschlagventil nach einem der Ansprüche 1 bis 11 angeordnet ist.

14. Drucklufteinrichtung nach Anspruch 13, **dadurch gekennzeichnet, dass** das elektro-pneumatische Ventil ein ABS-Ventil oder ein ASR-Ventil einer brems- und/oder antriebsschlupfgeregelten Bremsanlage des Fahrzeugs ist.

15. Drucklufteinrichtung nach Anspruch 12, **dadurch gekennzeichnet, dass** sie wenigstens einen Federspeicherbremszylinder einer pneumatischen oder elektro-pneumatischen Bremsanlage des Fahrzeugs umfasst, wobei in wenigstens einer Entlüftungsöffnung einer Wandung einer eine Speicherfeder aufnehmenden Federkammer des Federspeicherbremszylinders ein Entlüftungs- oder Rückschlagventil nach einem der Ansprüche 1 bis 10 angeordnet ist.

## Claims

1. Ventilation or check valve for ventilation or outlet openings of compressed air apparatuses of vehicles, comprising at least one diaphragm disk (2) which is made from flexible material, is held with a central region in a bore of a valve housing and is prestressed with a radially outer region against a valve seat (4) on the valve housing (3), in order to lift up from the valve seat (4) in a pressure-induced manner in the case of a pressure gradient between an inlet space and an outlet space or atmosphere and to open a flow cross section between the inlet space and the outlet space or atmosphere, **characterized in that**, as viewed in the circumferential direction of the diaphragm disk (2), a plurality of hold-downs (5, 6) which are arranged at a circumferential spacing from one another and hold down the radially outer region of the diaphragm disk (2) locally against the valve seat (4) are provided on the valve housing (3).

2. Ventilation or check valve according to Claim 1, **characterized in that** the hold-downs (5, 6) are arranged on a cover (1) of the valve housing (3), which cover (1) covers the bore of the valve housing (3) with the at least one diaphragm disk (2).

3. Ventilation or check valve according to Claim 2, **characterized in that**, as viewed in the circumferential direction of the cover (1), ventilation openings (8) are provided in the cover (1) at the circumferential positions of the hold-downs (5, 6).

4. Ventilation or check valve according to Claim 3, **characterized in that**, as viewed in the radial direction of the cover (1), wall sections (7) of arcuate cross section of the cover (1) are arranged between the ventilation openings (8) and the hold-downs (5, 6), which wall sections (7), as viewed in the circumferential direction of the cover (1), are arranged at the positions of the hold-downs (5, 6) and extend axially away from the cover (1) in relation to a center axis of the cover (1).

5. Ventilation or check valve according to Claim 4, **characterized in that** the wall sections (7) of the cover (1) protrude beyond the valve seat (4) on the valve housing (3) as viewed in a direction parallel to the center axis of the cover (1).

6. Ventilation or check valve according to one of Claims 4 to 5, **characterized in that** the arc length of the arcuate wall sections (7) is greater than the circumferential extent of the ventilation openings (8).

7. Ventilation or check valve according to one of Claims 4 to 6, **characterized in that**, as viewed in the circumferential direction of the cover (1), flow openings (10) are arranged between the arcuate wall sections (7), which flow openings (10) open into a radially outer annular duct (11) of the cover (1), which annular duct (11) communicates with the ventilation openings (8).

8. Ventilation or check valve according to one of Claims 2 to 7, **characterized in that** the diaphragm disk (2) is held on a journal (9) which is held centrally in the bore of the valve housing (3) and protrudes into a bore of the cover (1).

9. Ventilation or check valve according to one of the preceding claims, **characterized in that** mandrel-shaped stops (5) for the diaphragm disk (2) are configured on end faces of the hold-downs (5, 6) which face the diaphragm disk (2).

10. Ventilation or check valve according to one of the preceding claims, **characterized in that** the valve seat (4) is configured as a circumferential sealing blade on a bore edge of the bore.

11. Ventilation or check valve according to one of the preceding claims, **characterized in that** the hold-downs (5, 6) press the radially outer region of the diaphragm disk (2) locally against the valve seat (4).

12. Compressed air apparatus of a vehicle, comprising at least one ventilation or check valve according to one of Claims 1 to 11 in a ventilation or outlet opening.

13. Compressed air apparatus according to Claim 12, **characterized in that** it comprises at least one electropneumatic or pneumatic valve with at least one ventilation opening, in which a ventilation or check valve according to one of Claims 1 to 11 is arranged.

14. Compressed air apparatus according to Claim 13, **characterized in that** the electropneumatic valve is an ABS valve or an ASR valve of a brake slip-controlled and/or drive slip-controlled brake system of the vehicle.

15. Compressed air apparatus according to Claim 12, **characterized in that** it comprises at least one spring accumulator brake cylinder of a pneumatic or electropneumatic brake system of the vehicle, a ventilation or check valve according to one of Claims 1 to 10 being arranged in at least one ventilation opening of a wall of a spring chamber of the spring accumulator brake cylinder, which spring chamber accommodates an accumulator spring.

## Revendications

1. Soupape de purge ou clapet anti-retour pour des ouvertures de purge ou d'évacuation de dispositifs à air comprimé de véhicules, comportant au moins un disque (2) en matériau souple formant membrane, qui est retenu par une partie centrale dans un trou d'un corps de soupape et qui est précontraint par une partie extérieure radialement sur un siège (4) de soupape du corps (3) de soupape pour, s'il se produit une chute de pression entre un espace d'entrée et un espace de sortie ou l'atmosphère, être soulevé du siège (4) de la soupape en raison de la pression et dégager une section transversale d'écoulement entre l'espace d'entrée et l'espace de sortie ou l'atmosphère, **caractérisée en ce que**, considéré dans la direction périphérique du disque (2) formant membrane, il est prévu, sur le corps (3) de la soupape, plusieurs abaisseurs (5, 6), qui sont montés à distance dans la direction périphérique les uns des autres et qui appuient localement la partie extérieure radialement du disque (2) formant membrane sur le siège (4) de la soupape.

2. Soupape de purge ou clapet anti-retour suivant la revendication 1, **caractérisée en ce que** les abaisseurs (5, 6) sont montés sur un couvercle (1) du corps (3) de la soupape, lequel recouvre le trou du corps (3) de la soupape par le au moins un disque (2) formant membrane.

3. Soupape de purge ou clapet anti-retour suivant la revendication 2, **caractérisée en ce que**, considéré dans la direction périphérique du couvercle (1), il est prévu, sur les positions périphériques des abaisseurs (5, 6), des ouvertures (8) de mise à l'atmosphère dans le couvercle (1) .

4. Soupape de purge ou clapet anti-retour suivant la revendication 3, **caractérisée en ce que**, considéré dans la direction radiale du couvercle 1, il est disposé, entre les ouvertures (8) de mise à l'atmosphère et les abaisseurs (5, 6), des parties (7) de paroi, en forme d'arc de cercle en section transversale, du couvercle (1), qui, considérées dans la direction périphérique du couvercle (1), sont disposées aux positions des abaisseurs (5, 6) et s'éloignent axialement du couvercle (1) par rapport à un axe médian du couvercle (1).

5. Soupape de purge ou clapet anti-retour suivant la revendication 4, **caractérisée en ce que** les parties (7) de paroi du couvercle (1) dépassent du siège (4) de la soupape sur le corps (3) de la soupape, considérées dans une direction parallèle à l'axe médian du couvercle (1).

6. Soupape de purge ou clapet anti-retour suivant l'une des revendications 4 à 5, **caractérisée en ce que** la longueur d'arc des parties (7) de paroi en forme d'arc de cercle est plus grande que l'étendue périphérique des ouvertures (8) de mise à l'atmosphère.

7. Soupape de purge ou clapet anti-retour suivant l'une des revendications 4 à 6, **caractérisée en ce que**, considéré dans la direction périphérique du couvercle (1), il est disposé, entre les parties (7) de paroi en forme d'arc de cercle, des ouvertures (10) d'écoulement, qui débouchent dans un canal (11) annulaire extérieur radialement du couvercle (1), canal avec lequel communiquent les ouvertures (8) de mise à l'atmosphère.

8. Soupape de purge ou clapet anti-retour suivant l'une des revendications 2 à 7, **caractérisée en ce que** le disque (2) formant membrane est retenu sur un tenon (9) disposé centralement dans le trou du corps (3) de la soupape et pénétrant dans un trou du couvercle (1).

9. Soupape de purge ou clapet anti-retour suivant l'une des revendications précédentes, **caractérisée en ce que** des butées (5) en forme de broche, pour le disque (2) formant membrane, sont constituées sur des surfaces frontales, tournées vers le disque (2) formant membrane, des abaisseurs (5, 6).

10. Soupape de purge ou clapet anti-retour suivant l'une des revendications précédentes, **caractérisée en ce que** le siège (4) de la soupape est constitué sous la forme d'une arête d'étanchéité faisant le tour sur un bord du trou.

11. Soupape de purge ou clapet anti-retour suivant l'une des revendications précédentes, **caractérisée en ce que** les abaisseurs (5, 6) poussent la partie extérieure radialement du disque (2) formant membrane localement sur le siège (4) de la soupape.

12. Disposition à air comprimé d'un véhicule comportant, dans une ouverture de mise à l'atmosphère ou d'évacuation, au moins une vanne de mise à l'atmosphère ou un clapet anti-retour suivant l'une des revendications 1 à 11.

13. Dispositif à air comprimé suivant la revendication 12; **caractérisé en ce que** il comporte au moins une soupape électropneumatique ou pneumatique, ayant au moins une ouverture de mise à l'atmosphère, dans laquelle est disposée une soupape de mise à l'atmosphère ou un clapet anti-retour suivant l'une des revendications 1 à 11.

14. Dispositif à air comprimé suivant la revendication 13, **caractérisé en ce que** la soupape électropneumatique est une soupape ABS ou une soupape ASR d'un système de frein régulé en freinage et/ou de régulation du glissement en traction du véhicule ferroviaire.

15. Dispositif à air comprimé suivant la revendication 12, **caractérisé en ce qu'**il comprend au moins un cylindre de frein à ressort accumulateur d'un système de frein pneumatique ou électropneumatique du véhicule, dans lequel, dans au moins une ouverture de mise à l'atmosphère d'une paroi d'une chambre de ressort recevant un ressort accumulateur du cylindre de frein à ressort accumulateur, est disposée une soupape de mise à l'atmosphère ou un clapet anti-retour suivant l'une des revendications 1 à 10.
